# EUROPEAN PATENT APPLICATION

(11) **EP 3 498 107 A1**
(43) Date of publication of application: **19.06.2019**
(21) Application number: 17207593.9
(22) Date of filing: 15.12.2017
(51) Int. Cl.: A23L 27/21, A23F 5/04, A23L 27/28, A23F 5/10

(54) **PROCESS FOR ENHANCING IN SITU THE FLAVOUR OF A COFFEE PRODUCT**

(71) Applicant: Nestec S.A., 1800 Vevey (CH)
(72) Inventor: MITCHELL, William, Robert, 1006 Lausanne (CH); HAIDER, Christine Irmingard, 1003 Lausanne (CH); POISSON, Luigi, 1796 Courgevaux (CH); PALZER, Stefan, 1000 Lausanne (CH)
(74) Representative: Lomholt, Stig Bredsted

(57) **Abstract**

The present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor.

## Description

### FIELD OF THE INVENTION

The invention relates to a process for enhancing *in situ* the flavour of a coffee product comprising the steps of roasting green coffee beans until the desired roasting degree is achieved followed by the addition of an aqueous quenching solution comprising at least one flavour precursor.

### BACKGROUND OF THE INVENTION

Any discussion of the prior art throughout the specification should in no way be considered as an admission that such prior art is widely known or forms part of common general knowledge in the field.

Aroma, taste and flavour are closely connected concepts. Volatile aroma is defined as an odour or a smell sensed through the nose and retronasally, and also through the back of the mouth where the nasal and mouth cavities are interlinked. Non-volatile taste is the sense experienced by the tongue and describes sensations of saltiness, sweetness, sourness, bitterness or umami. Flavour is defined as the combination of both aroma and taste.

Aroma is one of the first senses experienced when preparing or consuming a coffee beverage. However, being largely composed of "volatile compounds" that easily evaporate at room temperature, aroma is also one of the most variable components of the sensory experience.

The raw coffee beans or green coffee beans (coffee beans before roasting) have a limited aroma and flavour profile that is often described as providing green, beany or musty notes. Green coffee beans contain a large number of chemical precursors of roast coffee flavour, including sugars, other carbohydrates (i.e. polysaccharides), chlorogenic acids, and nitrogen-containing compounds, which develop into aromatic compounds during the roasting process. The relative concentration of the chemical precursors varies between different green coffees depending on their origin and treatment. The principally thermally reactive compounds in the green coffee beans are the monosaccharides and sucrose, the chlorogenic acids, the free amino acids, and trigonelline.

During roasting, the characteristic coffee aroma and taste components are formed along with the typical brown colour of the beans (Maillard reaction and Caramelization). The most common way of developing those aroma and taste components consists in roasting the green coffee beans in hot air gases prior to grinding. Roasting triggers a series of chemical reactions within the beans causing the development of volatile compounds that contribute to the coffee aroma profile. These reactions include the Maillard reaction, Strecker degradation and degradation of individual amino acids, trigonelline, sugars, phenolic acids and lipids. On the other hand, roasting has the major disadvantage that aroma is lost during the process due to evaporation and degradation at later roasting course.

It is known that the variety and concentration of volatile compounds contributing to roasted coffee aroma and flavour depend on the composition of the non-volatile compounds in green coffee beans, and therefore from their origin, and on the roasting conditions. More than 950 compounds have been identified in different types of coffee, depending on their origin, degree of roasting and analytical methods, some of those compounds being more or less influential on the coffee aroma (reviewed in A. Farah, Coffee: Emerging Health effects and Disease Prevention, 1st Edition, 2012, Chapter 2). For example, the furans are found to be the most predominant group of compounds amongst the coffee volatiles and some of them have caramel-like odours. The pyrazines are the second most abundant class of aromatic compounds that contribute to the roasted nut, earthy, cereal, cracker or toast-like flavours in coffee. Next, the pyrroles are responsible for the sweet and caramel-like aromas in coffee. In addition, thiols are known to provide sulfury, catty, and meaty aroma.

Traditional roasting methods using dry air have the disadvantage that aroma is partially lost during the heat treatment. Different approaches therefore have been developed to preserve or even enhance the flavour of roasted coffee beans.

US 4 931 304 describes that adding flavour precursors to green coffee beans before roasting in order to enhance the flavour of roasted coffee beans is not expected to be efficient as the flavour precursors may be lost and/or altered during the roasting process, which can result in undesirable flavours in the roasted coffee beans.

Treatment of green coffee beans prior to roasting has been used to improve the flavour profile of roasted coffee beans. For example, EP 1 872 665 discloses a process for improving the flavour of roasted coffee wherein the flavour of roasted coffee beans is selectively modified by modifying the precursor composition in aqueous extracts of green coffee beans. The coffee extract obtained by extracting the green coffee beans for example with water is treated either physically (i.e. by heat treatment), chemically (i.e. by resin treatment) or biochemically (i.e. by fermentation using micro-organisms) to transform or remove undesirable flavour precursors. One effect of this process is to reduce the pH of the green coffee beans thereby modifying the roasting reactions to modulate flavour profiles. This process has the disadvantage of introducing complex treatment of the green coffee beans.

EP 0 271 957 discloses a process for making a better-tasting coffee wherein the green coffee beans are first partially roasted, then treated with either an alkaline solution, a green coffee bean extract solution or water to finally be roasted to a final roasting degree. The intermediate treatment of the pre-roasted coffee beans is supposed to interfere with the roasting chemical reactions initiated during the first roasting step in a manner that favourably modifies the chemistry of the final product. However, this process has the main disadvantage to introduce additional steps in the roasting process.

Special roasting process called "Torrefacto" is a traditional way of modifying coffee flavour by adding sugar at the end of the roasting process. It has the effect of glazing the beans as the sugar caramelizes around the beans, resulting in dark black glaze on the coffee beans. The obtained flavour profile is very bitter, even with burned notes, which makes that the resulting coffee beans are blended with normal roast and ground coffee for consumption.

As aroma and flavour of roast and ground coffee are critical to consumer liking, there is a need for a simple process that can result in an enhanced aroma and taste profile *in situ.* Furthermore, it would be advantageous to have a reliable and simple process for enhancing specific aroma profiles obtained during roasting.

It is therefore an object of the present invention to provide a process for enhancing *in situ* the aroma and taste of a coffee product comprising the step of first roasting the green coffee beans followed by the step of cooling the roasted coffee beans by adding an aqueous quenching solution comprising at least one flavour precursor.

### SUMMARY OF THE INVENTION

One aspect of the present invention relates to a process for enhancing *in situ* the flavour of roasted coffee beans comprising the steps of
a) roasting green coffee beans and
b) cooling the roasted coffee beans by adding a quenching solution to the roasted coffee beans, wherein said quenching solution comprises at least one flavour precursor.

Another aspect of the invention relates to a process for enhancing *in situ* the flavour of roasted coffee beans, wherein the quenching solution comprises at least one sugar and/or at least one amino acid.

Another aspect of the present invention also relates to a beverages made from roasted coffee beans obtainable by the process as described in the claims.

### BRIEF DESCRIPTION OF THE FIGURES

The present invention is further described hereinafter with reference to some of its embodiments shown in the accompanying drawings in which:

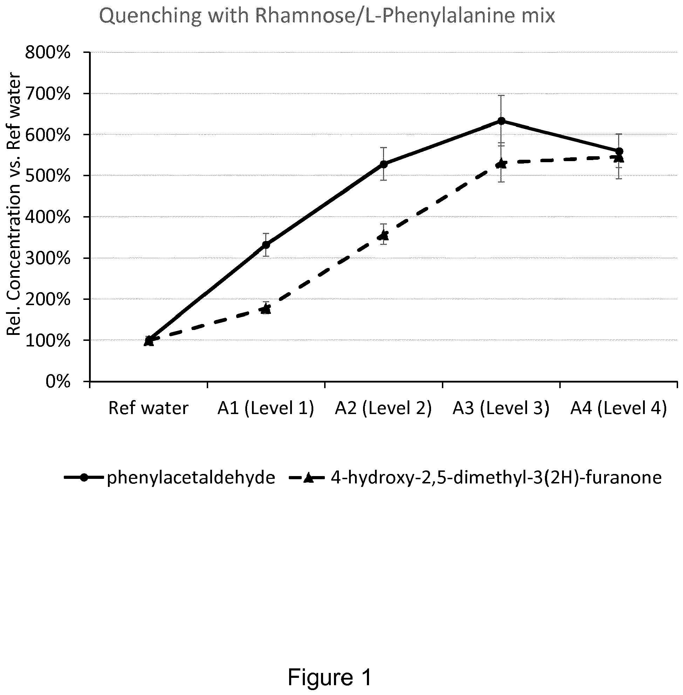

Figure 1 shows the relative concentrations of key aroma compounds [%] in reference and invention products at different precursor levels (quenching of rhamnose/L-phenylalanine; Samples A1 to A4), demonstrating the increase in phenylacetaldehyde and 4-hydroxy-2,5-dimethyl-3(2H)-furanone when quenching with quenching solution comprising rhamnose and phenylalanine as flavour precursors.

### DETAILED DESCRIPTION OF SOME EMBODIMENTS OF THE INVENTION

In this specification, the following terms or expression are given a definition that must be taken into account when reading and interpreting the description, examples and claims.

The expression "green coffee bean or beans" refers to unroasted mature or immature coffee beans. These have been processed by wet or dry methods for removing the outer pulp and mucilage, and have an intact wax layer on the outer surface.

The term "roasting" means a dry, or almost dry, heat treatment of the coffee beans. Roasting process commonly starts with a drying phase (up to 100 °C, endothermic), followed by an exothermic phase (usually 170-220 °C) resulting in most of the flavour components, and ends with a cooling phase. Roasting results in a change of coffee bean colour from green to brown and in the development of characteristic roasted coffee aroma and taste. These flavours result from chemical processes such as Maillard reaction, Caramelization, and degradation reactions.

The expression "roasted coffee beans" refers in the context of the present invention to coffee beans that have been subjected to roasting reactions at elevated temperatures, usually temperatures above 140°C.

The expression "*in situ*" means that flavour resulting from the reaction of flavour precursors comprised in the quenching solution is developed directly within the roasted coffee beans during the chemical reactions , as opposed for example to aromatization of roasted coffee beans addition of natural or synthetic aromas or flavours to the surface of roasted coffee beans.

The term "aroma" means a distinctive, strong, pleasant smell from a food or a drink.

The term "flavour" means the combination of the aroma and the taste.

The expression "flavour precursor" (or "flavour precursors") means a product or a compound, which does not necessarily possess flavouring properties itself and which is either originally contained in the green coffee bean or can be added to coffee beans for the purpose of producing flavour by breaking down or reacting with other components during coffee bean processing.

The expression "quenching solution" is used to designate an aqueous solution used to cool down the coffee beans immediately at the end of the roasting cycle. The cooling step is commonly designated as "quenching" step.

All percentages are by weight unless otherwise stated. The expression "weight %" and "wt%" are synonymous. They refer to quantities of a particular substance expressed in percent on total weight basis.

It is noted that the various aspects, features, examples and embodiments described in the present application may be compatible and/or combined together.

As used in the specification, the words "comprises", "comprising" are not to be interpreted in an exclusive or exhaustive sense. In other words, they are intended to mean "including, but not limited to".

Typically, coffee beans are roasted using heated air (roasting gas or hot combustion gases or hot air) at elevated temperature that usually exceed 190°C. Commonly, roasting is carried out at temperatures between 200 and 240°C. The chemical reactions responsible for the aroma and flavour of roasted coffee are triggered at approximatively 140 °C. The microstructure of the coffee beans is also completely altered during roasting, resulting in greater bean volume, greater pore volume and larger micropores in the cell walls.

Commonly, the roasting conditions are adapted to obtain a desired colour of the roasted beans, varying form light to dark, and a desired flavour profile. However, the roasting parameters such as the amount of coffee in the roaster, temperature of roasting, roasting time, and speed of hot air circulation used to reach a certain degree of roasting degree can vary considerably and have an impact on the final flavour of roasted coffee beans. Thus, two samples of the same coffee origin roasted to the same degree may have different chemical compositions if roasted under different conditions. For example, coffee roasted at higher temperature for short time have higher acidity, more soluble solids, and a different volatile profile than those roasted for longer periods at lower temperatures. Additionally, the origin and quality of the green coffee determines the green bean coffee constituents, such as the precursor composition, and are therefore also impacting the taste and aroma developed during the roasting process. It is generally considered that the precursor composition in the green coffee beans determines which flavour compounds are formed during roasting, while the roasting parameters have an impact on the kinetic of formation of said flavour compounds.

Controlling every parameters that can impact flavour(s) generated during roasting to achieve the desired final flavour of roasted coffee beans is notably difficult. Therefore, there is a need to have a way to ensure that the desired flavour can be generated in the roasted coffee beans without increasing processing complexity.

The inventors have found that quenching the roasting process using a quenching solution comprising at least one flavour precursor is particularly effective for enhancing *in situ* the flavour in the roasted coffee beans, resulting from increased generation of specific aroma compounds within the roasted coffee beans without the need to have additional processing step.

Particularly, the inventors have observed that, depending on the type of flavour precursor comprised in the quenching solution, a specific aroma profile could be achieved, as shown by the increase in particular aroma compounds within the roasted coffee beans.

Therefore, an aspect of the present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor.

Roasting of the green coffee bean according to the present invention may be performed in a drum roaster, a paddle roaster or a fluidized bed roaster using roasting parameters (i.e. roasting time and temperature) known in the art. In one embodiment of the present invention, roasting of the green coffee beans is achieved in at least one roasting chamber.

Flavour is first developed during the roasting step a) of the present invention. Amongst green coffee constituents, the principal flavour precursors are sugars, proteins, free amino acids, trigonelline and chlorogenic acids. In the early drying phase of roasting, free water contained in the green coffee beans is lost and is followed by a dry heating phase consisting of multiple chemical processes including degradation and polymerization reactions. During the exothermic phase and the drying of the beans a size expansion of the coffee beans is observed under increased pressure accompanied by generation from the precursors of volatile and non-volatile compounds responsible for taste and aroma, notably during Maillard reaction.

During Maillard reaction, reducing sugars (for example fructose or glucose) react with free amino acids (for example glutamic acid, aspartic acid or asparagine) or peptides or proteins resulting in volatile and non-volatile reaction products. Consequently, almost all free sugars are lost during Maillard reaction and caramelization, and almost all free amino acids are completely decomposed upon roasting. Therefore, only traces of free amino acids and free sugars can be found in coffee beans after roasting.

The roasting process is usually stopped by cooling the coffee beans quickly either with cool air or addition of water, or combination of cool air and water. This cooling step, known as quenching step, can be performed directly in the roasting chamber or can be performed in a separate cooling chamber. The purpose of the quenching step is to decrease the temperature of the roasted coffee beans as quickly as possible, thereby stopping all chemical reactions induced by high temperature during roasting when the desired taste, aroma and/or colour are achieved.

In the present invention, cooling of the coffee beans is performed by adding a quenching solution which comprises at least one flavour precursor. The quenching solution comprising at least one flavour precursor is applied directly on the roasted coffee beans which have at this stage a high internal temperature. Upon contact with the roasted coffee beans, the quenching solution rapidly evaporates and the core temperature in the coffee beans rapidly drops. However, the inventors have surprisingly found that despite the rapid evaporation of the quenching solution and the consequent rapid drop of the core temperature in the coffee beans, the flavour precursor(s) comprised in the quenching solution can still undergo chemical reactions resulting in the generation of significantly high amount of aroma compounds in the coffee beans. Thereby flavour of roasted coffee beans is enhanced *in situ,* as illustrated by analysis of the aroma compounds in the Examples and in Figure 1. The enhancement *in situ* of flavour in the roasted coffee beans according to the present invention resulted in improved sensory profiles of coffee beverage prepared with the roasted coffee beans processed according to the claimed invention, as illustrated in the Examples.

Adding a quenching solution comprising at least one flavour precursor has the effect of providing flavour precursor to the roasted coffee grains that have exhausted most of the intrinsic flavour precursors during the roasting step. The flavour precursor(s) thereby provided can then undergo flavour generating reactions within the short time during which the core temperature of the roasted coffee beans is still sufficient to support such reactions.

The process according to the present invention therefore has the advantage that the flavour profile of roasted coffee beans can be enhanced *in situ,* meaning directly within the roasted coffee bean, without adding a further heating step after the roasting step, or without adding steps of treatment of coffee beans prior to or after the roasting cycle. Therefore, the process according to the present invention has the advantage of enhancing *in situ* the flavour of roasted coffee beans while keeping the same processing steps and avoiding complex additional steps such as green coffee beans pre-treatment.

The process according to the present invention has the additional advantage that since the flavour is enhanced *in situ,* a significant part of the key aroma compounds generated during the quenching step b) are not lost in the atmosphere due to evaporation but are kept at the surface of the roasted coffee beans or within the roasted coffee beans (probably due to the porous structure of the roasted coffee beans). Consequently, the enhanced flavour profile of the roasted coffee beans according to the invention results into enhanced "in-cup" flavour.

It is commonly accepted that the flavour composition constantly changes during the roasting process and that the perceived aroma goes through an optimum. Continuing roasting over this "optimum roasting degree" may result in undesired over-roasted off-notes. Since the process according to the present invention does not need to add further heating step, it has the additional advantage to enhance the flavour profile of roasted coffee beans *in situ* without over-roasting the coffee beans and therefore allows avoiding undesired unbalanced burnt, harsh off-notes that would have resulted from over-roasting.

Cooling down the roasted coffee beans at the end of the roasting cycle can be done either with aqueous solution, usually water, or with fresh air. Cooling is more efficient when quenching with water. Therefore, in one embodiment of the present invention, a quenching solution is added to cool the coffee beans at the end of the roasting step, wherein the quenching solution comprises at least one flavour precursor. For example, the quenching solution comprising at least one flavour precursor can be sprayed towards the coffee beans as a mist.

In another embodiment of the present invention, the roasted coffee beans can be discharged from the roasting chamber into a closed cooling chamber in which the quenching step b) takes place. In yet another embodiment, the roasted coffee beans are discharged from the roasting chamber into an opened cooling recipient or tray in which the quenching step b) takes place.

The quenching solution generally evaporates immediately, given the high temperature of the coffee beans and of the environment. Consequently, water absorption during quenching is low and sufficient to adapt the moisture content of the roasted coffee beans to the right level for grinding. Therefore, the process according to the present invention has the further advantage of enhancing *in situ* the flavour of roasted coffee beans while keeping the final moisture content of the roasted coffee beans to a level such that additional drying step before grinding are avoided. Therefore, in one embodiment of the present invention, the final moisture content of roasted coffee beans after step b) is less than 15 wt%, preferably less than 10 wt% and more preferably less than 5 wt%.

In another embodiment, the final moisture content of the roasted coffee beans after step b) is between 1 wt% and 10 wt%, preferably between 1 wt% and 5 wt%, more preferably between 2 wt% and 4 wt%.

To achieve the targeted final moisture content, only the required amount of quenching solution is added to the roasted coffee beans. In one embodiment of the present invention, the quenching solution is added in step b) in an amount between 2 wt% and 25 wt% of total green coffee beans, preferably in an amount between 5wt% and 25wt% of total green coffee beans, more preferably in an amount between 10% and 25wt% of total green coffee beans.

One embodiment of the present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor and wherein the quenching solution is added in an amount between 2wt% and 25wt% of total green coffee beans.

Another embodiment of the present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor and wherein the quenching solution is added in an amount between 10wt% and 25wt% of total green coffee beans.

A yet other embodiment of the present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor and wherein the quenching solution is added in an amount between 11 wt% and 16 wt% of total green coffee beans.

One embodiment of the present invention relates to a process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor, and
wherein the quenching solution is added in an amount between 2wt% and 25wt% of total green coffee beans, and
wherein the final moisture content of roasted coffee beans after step b) is less than 15 wt%.

The quenching solution according to the present invention comprises at least one flavour precursor. The inventors have found that significantly higher levels of aroma compounds were generated *in situ* when quenching with the quenching solution comprising at least one flavour precursors as compared to level of aroma compounds generated when quenching with water only. Quenching with a quenching solution comprising at least one flavour precursors has the advantage that the flavour of the final product can be controlled by adding specific combinations of flavour precursors known to develop specific flavour. Surprisingly, the inventors have found that the levels of key aroma compounds generated using the process of the claimed invention are higher than the levels of the same key aroma compounds generated when pre-roasted coffee beans have been soaked over-night into a solution comprising same flavour precursors, as illustrated in Table 2.

In one embodiment of the present invention, the quenching solution comprises at least one flavour precursor in an amount between 0.01wt% and 10wt%, such as in an amount between 0.01wt% and 8wt%, or such as in an amount between 0.01wt% and 6wt%, or such as in an amount between 0.01wt% and 5wt%. In a preferred embodiment, the quenching solution comprises flavour precursors in an amount between 0.5wt% and 10wt%, such as between 0.5wt% and 8wt%, or such as 0.5wt% and 6wt%. In a more preferred embodiment, the quenching solution comprises at least one flavour precursor in an amount between 0.01 wt% and 5 wt%.

For the purpose of enhancing flavour of roasted coffee beans *in situ,* in one embodiment of the present invention, the quenching solution comprises at least one sugar and at least one amino acid as flavour precursors. Having at least one sugar and at least one amino acid as flavour precursors allows choosing the type of aroma and taste compounds that will be generated *in situ,* and therefore allows modulating the desired flavour in roasted coffee beans *in situ.* For example, cooling the roasted coffee beans in step b) with a quenching solution comprising rhamnose and phenylalanine as flavour precursors results in *in situ* enhancement of honey, floral and caramel flavours. This flavour enhancement correlates with an increase in phenylacetaldehyde and 4-hydroxy-2,5-dimethyl-3(2H)-furanone as shown in Example 1 and Figure 1, and has been assessed by a tasting panel.

In one embodiment, the quenching solution comprises at least one sugar and/or at least one amino acid.

The sugar(s) comprised in the quenching solution is either a non-reducing and/or a reducing sugar.

The sugar is selected from the group consisting of rhamnose, xylose, glucose, galactose, ribose, fructose, glyceraldehyde, palatinose, isomaltulose, arabinose, lactose, maltose, cellobiose, invert sugar, sucrose, oligofructose and any combination thereof. In another embodiment, the quenching solutions comprises more than one sugar, said sugars are either non-reducing and/or reducing sugars.

In one embodiment of the present invention, the quenching solution comprises at least one sugar in an amount between 0.5wt% and 5wt%, preferably between 0.5wt% and 4wt%. In a preferred embodiment, the amount of sugar comprised in the quenching solution is between 0.6wt% and 4wt%.

In another embodiment, the quenching solution comprises at least an amino acid. The amino acid is selected from the group consisting of methionine, serine, alanine, lysine, cysteine, proline, hydroxyproline, phenylalanine, leucine, isoleucine, threonine, valine, glutamine, tyrosine, arginine, glycine, and any other amino acid or combination thereof.

In one embodiment of the present invention, the quenching solution comprises at least one amino acid in an amount between 0.02wt% and 0.5wt%, such as between 0.02wt% and 0.4wt%, or such as between 0.02wt% and 0.3wt%. In a preferred embodiment, the total amount of amino acid comprised in the quenching solution is between 0.025wt% and 0.3wt%, such as between 0.03wt% and 0.3wt%.

The type and amount of flavour(s) enhanced *in situ* depend on the type of flavour precursor(s) comprised in the quenching solution. Therefore, by choosing the flavour precursor or combination of flavour precursors comprised in the quenching solution, a desired and targeted final flavour can be obtained.

Therefore, in one aspect of the present invention, the quenching solution comprises at least one sugar and at least one amino acid. This has the effect that broader range of flavour can be achieved.

In one embodiment of the present invention, the quenching solution comprises at least one sugar in an amount comprised between 0.5wt% and 5wt% and at least one amino acid in an amount comprised between 0.02wt% and 0.5wt%.

In a preferred embodiment, the quenching solution comprises at least one sugar in an amount between 0.6 wt% and 4 wt% and at least one amino acid in an amount between 0.03 wt% and 0.3 wt%.

In yet another embodiment, the quenching solution can comprise buffering agents, preferably phosphate buffer, carboxylate buffer, or citrate buffer. Phosphate and carboxylate also have a catalytic impact on the flavour compound reaction.

In another embodiment, the quenching solution can comprise an ingredient that naturally comprises a mix of precursors, preferably green coffee extract, a fruit juice or any other complex precursor source, or any combination thereof.

The roasted coffee beans having enhanced flavour in situ have been used to prepare coffee beverage. Sensory evaluation of the coffee beverage prepared from the roasted coffee beans according to the present invention demonstrated significantly enhanced flavour profiles (see Tables 2 and 6).

One object of the present invention relates to beverage made from roasted coffee beans obtainable by the process of the present invention. The beverage of the invention can be in the form of water-soluble powder or granules or can be in a liquid form, for example as coffee concentrate. Examples of such beverages are powdered instant coffee, for example freeze-dried or spray dried coffee powder, instant espresso coffee, coffee mixes, ready-to-drink beverages, cold brew coffee beverages, liquid coffee concentrates, roast and ground coffee with or without capsules, and mix of roast and ground and instant coffee.

The invention is further described with reference to the following examples. It will be appreciated that the invention as claimed is not intended to be limited in any way by these examples.

### Example 1

Process for providing an aroma enriched roasted coffee beverage by quenching with a quenching solution comprising a mix of rhamnose and L-phenylalanine as flavour precursors.

### Methods

### Precursor quenching

The green coffee used was an Arabica Brazil Santos, 2.5 kg per roasting batch. The quenching rate (i.e. amount of quenching solution added in step b)) was fixed at 10%wt, thus, the amount of quenching solution used was 250 g on a green coffee batch of 2'500 g.

The precursor mix, rhamnose/L-phenylalanine, was applied at four different levels (**Table 1**). For the lowest level of precursors mix 1.52 g of L-phenylalanine and 15.2 g rhamnose were dissolved in 250 mL of water. At the highest precursor level (level 4) 3.04 g L-phenylalanine and 60.8 g of rhamnose were provided to the quenching water.
The green coffee beans were roasted on a RFB-Junior roaster (Neuhaus-Neotec, Germany) for 410 s to an end bean temperature of 238 °C, reaching a roasting degree of 80 +/- 3 points on the CTn scale (Color test Neuhaus).

Injecting the aqueous precursor mix into the quenching chamber of the roaster would have been very challenging due to modifications needed to the roaster line. Therefore, a modified quenching approach was used, whereby the hot roasted coffee bypassed the cooling/quenching chamber, and immediately ejected into the outlet hopper. The outlet hopper contained the quenching liquid (i.e. either water or the aqueous solution containing precursors), and was then stirred manually. For the control reference (Reference water; thereafter abbreviated as RW) only water at 10%wt level (250 g) was applied. After quenching, the roasted coffee beans were not further dried and were stored before sensory evaluation.

During stirring of the roasted beans with the precursor enriched quenching water, there was very clear differences in aroma perceived as compared to the control. The aromas described for samples A1 to A4 included "honey-like, chocolaty, roasty and caramel" aroma notes. For the control, the aroma was found similar to the aroma obtained by conventional air cooling in the cooling chamber.

**Table 1: Precursor quantities (rhamnose/L-phenylalanine, [g]) provided to the quenching water (250 mL) and added into 2'500 g of green coffee beans; reference and invention products (Samples A1 to A4).**

| **Precursor** | **Precursor quantity [g]** | | | | |
|---|---|---|---|---|---|
| | **Reference water - RW** | **Level 1 - A1** | **Level 2 - A2** | **Level 3 - A3** | **Level 4 - A4** |
| Rhamnose | 0 | 15.2 | 30.4 | 45.6 | 60.8 |
| L-Phenylalanine | 0 | 1.52 | 3.04 | 4.56 | 3.04 |

### Precursor soaking

For the preparation of the precursor soaking samples (thereafter abbreviated as SGC) the single components (1.52 g L-rhamnose, and 152 mg L-phenylalanine; corresponding to Level 1 in quenching trials) were dissolved in 100 mL of demineralized water. In a first trial green coffee beans (250 g) were soaked into the precursor mix at 50 °C for 5 h and then overnight at room temperature. During soaking, the beans were gently stirred using a Rotavapor (Buchi, Switzerland). After precursor absorption the treated beans were washed with the same mass of water as beans for 10 seconds. The washing losses were controlled by analyzing the washing waters with an ATAGO PAL3 pocket refractometer, which measures total solid content on a Brix scale. Finally, the washed coffee beans were frozen to -80 °C, then freeze-dried for 24 hours at 0.1 mbar and about -80 °C on an Alpha 2-4 LSC freeze-dryer (Christ, Germany) to reach a moisture content of 10%wt ± 0.5% and roasted using procedure described above. For the control reference (i.e control soaking) the green coffee beans (250 g) were soaked with 100 mL of water, and same subsequent procedure was applied as described above.

In a further trial lightly pre-roasted coffee beans (CTN 171; thereafter abbreviated as SPR) were soaked with a rhamnose/L-phenylalanine precursor mix (1.52 g L-rhamnose, and 152 mg L-phenylalanine; corresponding to Level 1 in quenching trials) accordingly to the procedure described before. Similarly, a control reference sample was produced by soaking 100 mL of water to the pre-roasted coffee.

### Sensory evaluation:

All produced samples were evaluated by a sensory panel composed of 6 trained assessors. The roasted coffee beans were ground on a Ditting grinder (Ditting, Switzerland) at Ditting level 5, and 5 g of R&G coffee were weight in a coffee cup and brewed with 100 mL of hot water (95 °C). After 2 minutes the panel assessed aroma and taste quality of the beverage.

### Sensory results

In general, the precursor soaked products (SGC and SPR) were perceived as less coffee-like and milder by the sensory panel (**Table 2**) as compared to their respective references. The green coffee sample soaked into the precursor mix (SGC) was found rather cereal-like and bready in aroma, and more acidic in taste. Whereas the pre-roasted beans sample soaked into the precursor mix (SPR) resulted in a more roasty and bitter beverage.

Surprisingly, the roasted coffee beans quenched with a quenching solution comprising the precursor mix revealed a higher differentiation in aroma as compared to the samples soaked with same precursor mix. The samples processed according to the present invention and quenched at four different concentration levels were all found different as compared to the water-quenched reference, providing significantly enhanced aroma with honey and floral notes. The trial at an intermediate level (Level 2) was described most balanced in aroma and taste, whereas the sample at highest concentration of precursor mix (Level 4) was perceived as quite unbalanced during sensory evaluation.

**Table 2: Sensory results of the invention products (samples A1 to A4) and soaked samples (SGC and SPR) treated with rhamnose/L-phenylalanine precursor mix. Sensory results are expressed against respective references quenched with water or soaked with water.**

| **Sample** | **Flavor quality** |
|---|---|
| **Level** 1 - A1 | Honey, balanced |
| Level 2 - A2 | Honey, floral |
| Level 3 - A3 | Honey, strong |
| Level 4 - A4 | Honey, floral, strong, unbalanced |
| SGC | Bready, cereal, mild, more acidic |
| SPR | Less coffee intensity, milder, roasty, more bitter |

### Aroma analysis

The relative amounts (in %) of 25 flavour compounds were determined in the roasted and ground coffee (R&G; prototype samples A1 to A4, B1 to B3, and GC1 to GC3; reference in water) of this invention as well as in the soaking samples (water references, SGC, and SPR). The results of the respective control samples (quenching and soaking) were set as 100% references.

### Sample preparation

The roasted coffee beans were ground on a Ditting grinder (Ditting, Switzerland) at Ditting level 5, and 0.5 g of the coffee powder were provided into silanised glass vials that were sealed (standard 20 mL vials used for headspace/SPME analysis).

### Extraction of aroma

The sample was equilibrated for 60 min at room temperature. Aroma compounds were then extracted from the headspace by solid phase microextraction (SPME) at 40°C during 10 min (2 cm fiber, 50/30 µm StableFlex, coated with PDMS/DVB/Carboxen; Supelco, Buchs, Switzerland), and thermally desorbed into the split-splitless injector (in split-mode; split of 2) heated at 240 °C for 10 min.

### GC/MS analysis

Separation was carried out on a 60 m x 0.25 mm x 0.25 µm polar DB-624UI column (Agilent, Basel, Switzerland) using an Agilent 7890B gas chromatograph (Agilent, Basel, Switzerland). Helium was used as carrier gas with a constant flow of 1.2 mL/ min. Following oven program was applied: initial temperature of 40 °C was held for 2 min, then raised to 240 °C at 5 °C/min, and final temperature held for 10 min. Mass spectrometry was performed on an Agilent 7010 Triple Quad mass spectrometer (Agilent, Basel, Switzerland). Electron impact ionization was applied, and the mass spectrometer was operated in the full scan mode (m/z 30-250) at a spectra acquisition rate of 5 spectra/s. Chromatograms were processed using the Agilent MassHunter software.

### Data consolidation

Data were consolidated by means of MassHunter software (Agilent, Basel, Switzerland). The peak areas of each single analyte were converted to relative concentrations in % using the analyte peak of the control (quenching or soaking) as 100% reference. The relative concentrations of aroma classes were obtained by averaging the respective single components of the class.

### Analysis results

The results in **Table 3** revealed significantly higher concentrations of the honey-like smelling Strecker degradation component phenylacetaldehyde in the precursor quenching samples (Samples A, level 1 to level 4) as compared to the water quenched control sample (RW). The quantities constantly increased from Level 1 (331%) to Level 3 (633%), and a saturation was shown at Level 4 (560%) where no further increase was observed **(Error! Reference source not found.).** Similarly the caramel smelling Maillard compound 4-hydroxy-2,5-dimethyl-3(2H)-furanone (better known as Furaneol) constantly increased from level A1 to level A3 by a factor of 5.3, reaching a plateau at level 4 (546%).

The roasted samples soaked with the same precursor mix (in green coffee beans or pre-roasted coffee beans) resulted in an increase of about factor 2 for both assessed components of interest, phenylacetaldehyde and 4-hydroxy-2,5-dimethyl-3(2H)-furanone, respectively **(Table 4).** Surprisingly the increase in these compounds (particularly phenylacetaldehyde) is much lower in the soaking samples as compared to the invention products (precursor quenching), although a better retention of generated aroma compounds could have been expected in the soaked prototypes.

In conclusion, the results demonstrated that the short time of heat treatment of precursors on the hot roasted coffee surface is sufficient to generate potent aroma compounds. In addition, an important concentration of generated aroma is retained in the invention product, which impart a significant sensory differentiation in the final coffee beverage.

**Table 3: Relative concentrations of key aroma compounds [%] in reference and invention products (quenching of rhamnose/L-phenylalanine; Samples A1 to A4)**

| **Aroma compound** | **Concentration [%] in R&G coffee** | | | | |
|---|---|---|---|---|---|
| | **Reference water - RW** | **Level 1 - A1** | **Level 2 - A2** | **Level 3 - A3** | **Level 4 - A4** |
| phenylacetaldehyde | 100% | 331% | 528% | 633% | 560% |
| 4-hydroxy-2,5-dimethyl-3(2H)-furanone | 100% | 178% | 357% | 532% | 546% |

**Table 4: Relative concentrations of key aroma compounds [%] in soaking references (water) and precursor soaking product (Samples SGC and SPR)**

| **Aroma compound** | **Concentration [%] in R&G coffee** | | | |
|---|---|---|---|---|
| | **Reference GC -water** | **Soaking GC - SGC** | **Reference pre-roasted - water** | **Soaking pre-roast - SPR** |
| phenylacetaldehyde | 100% | 233% | 100% | 212% |
| 4-hydroxy-2,5-dimethyl-3(2H)-furanone | 100% | 208% | 100% | 171% |

### Example 2

Process for providing an aroma enriched roasted coffee beverage by quenching of a rhamnose/L-leucine precursor mix.

For the preparation of the precursor quenching samples the single components (rhamnose and L-leucine, at 3 different concentration levels; **Table 5**) were dissolved in 250 mL of water. For the lowest level of precursors mix (level 1) 1.075 g of L-leucine and 15.05 g of rhamnose were dissolved in 250 mL of water. At the highest precursor level (level 3) 2.15 g of L-leucine and 60.2 g of rhamnose were provided to the quenching water.
Subsequent roasting and quenching procedure was performed as described in Example 1. Sensory evaluation and aroma analysis were also conducted as described in Example 1.

**Table 5: Precursor quantities (rhamnose/L-leucine; [mg]) provided to the quenching water (250 mL) and added into 2'500 g of green coffee beans; reference and invention products (Samples B1 to B3).**

| **Precursor** | **Precursor quantity [g]** | | | |
|---|---|---|---|---|
| | **Reference water - RW** | **Level 1 - B1** | **Level 2 - B2** | **Level 3** - **B3** |
| Rhamnose | 0 | 15.05 | 30.1 | 60.2 |
| L-Leucine | 0 | 1.075 | 2.15 | 2.15 |

### Sensory results

The invention samples quenched with the precursor mix at three different concentration levels were all found significantly different by the sensory panel (**Table 6**). The aroma was found to be enhanced in roasty, chocolaty, and floral notes. An unbalanced aroma at higher precursor levels was not perceived.

**Table 6: Sensory results of the invention products (samples B1 to B3) treated with rhamnose/L-leucine precursor mix. Sensory results are expressed against respective reference quenched with water only.**

| **Sample** | **Flavor quality** |
|---|---|
| Level 1 - B1 | Roasty, fresh coffee, complex, floral |
| Level 2 - B2 | Roasty, chocolate, floral |
| Level 3 - B3 | Roasty, chocolate, floral, smooth taste |

### Analysis results

The results in **Table 7** reveal significantly higher concentrations of the malty smelling Strecker degradation component 3-methylbutanal in the precursor quenching samples (Samples B, level 1 to level 3) as compared to the water quenched control sample (RW). The quantities constantly increased from Level 1 (257%) to Level 3 (454%). Similarly the caramel smelling Maillard compound 4-hydroxy-2,5-dimethyl-3(2H)-furanone constantly increased from level B1 to level B3 by a factor of 2.7.

**Table 7: Relative concentrations of key aroma compounds [%] in reference and invention products (quenching of rhamnose/L-leucine, Samples B1 to B3)**

| **Aroma compound** | **Concentration [%] in R&G coffee** | | | |
|---|---|---|---|---|
| | **Reference water** - **RW** | **Level 1 - B1** | **Level 2 - B2** | **Level 3 - B3** |
| 3-methylbutanal | 100% | 257% | 286% | 454% |
| 4-hydroxy-2,5-dimethyl-3(2H)-furanone | 100% | 130% | 193% | 269% |

### Example 3

Process for providing aroma enriched roasted coffee beverage by adding a quenching comprising a green coffee extract as the precursor mix.

### Water extraction of green coffee beans.

Green coffee beans were extracted with hot water applying following conditions: 10 kg of green coffee beans were mixed with 20 L of water in a Scanima Batch Mixer (Tetra Pak Scanima, Denmark) and heated to 60 °C for 1 h. The obtained extract was drained, and the coffee beans were extracted another four times with 20 L of demineralized water at 60 °C for a total of 4 h to obtain the water soluble substances (total 100 L of extract). The resulting extraction yield was found at 20.5% (23.2% on dry matter base). The obtained green coffee extracts were combined and freeze-dried in a Lyobeta 35 freeze-dryer (Telstar, Terrassa, Spain) and stored at -40 °C until use.

An aliquot of the dried green coffee extract (**Table *8***) was then dissolved in 250 mL of water, and put to refrigeration until use.

Subsequent roasting and quenching procedure was performed as shown in Example 1. Sensory evaluation and aroma analysis were also conducted as described in Example 1.

**Table 8: Green coffee extract quantities [g] provided to the quenching water (250 mL) and added into 2'500 g of green coffee beans, reference and invention product (green coffee extract, Sample GC), and corresponding natural green coffee level [%].**

| **Precursor** | **Green coffee extract quantity [g] and corresponding level [%]** | | | |
|---|---|---|---|---|
| | **Reference water - RW** | **Level 1 - GC1** | **Level 2 - GC2** | **Level 3 - GC3** |
| GC extract | 0 | 25 | 50 | 100 |
| % natural level | 0 | 5% | 10% | 20% |

### Sensory results

The invention sample quenched with the green coffee extract at 5% level depicted a roasty, chocolaty and complex coffee aroma (**Table *9***). The samples at higher extract levels also showed an increased roasty and chocolaty aroma, with additional phenolic and woody notes appearing, particularly at the highest level (20% green coffee extract level).

**Table 9: Sensory results of the invention products treated with green coffee extract (samples GC1 to GC3). Sensory results are expressed against respective reference quenched with water only.**

| **Sample** | **Flavor quality** |
|---|---|
| Level 1 - GC1 | Roasty, chocolaty, strong and complex coffee |
| Level 2 - GC2 | Roasty, chocolaty, woody, phenolic |
| Level 3 - GC3 | Roasty, chocolaty, strong woody, phenolic |

### Analysis results

The results of the quenching trial with green coffee extract are summarized in **Table 10.** As compared to the invention products in Example 1 and 2 the changes in the aroma composition are more complex. The changes on the concentrations of single compounds were less accentuated as compared in Example 1 and 2, but major part of assessed components were impacted. Aroma compounds that increased by the quenching with green coffee extract were the Strecker aldehydes like 2-methylpropanal (green, malty), thiols like 3-mercapto-3-methylbutyl formate (fruity, catty), phenols such as 4-vinyl-2-methoxyphenol (phenolic, woody), and furanones like 4-hydroxy-2,5-dimethyl-3(2H)-furanone (caramel). On the other hand compounds like the pyrazines (2-ethyl-3,5-dimethylpyrazine, earthy, roasty), were determined at slightly lower quantities as compared to the water reference.

**Table 10: Relative concentrations of key aroma compounds [%] in reference and invention products (green coffee extract, Samples GC1 to GC3)**

| **Aroma compound** | **Concentration [%] in R&G coffee** | | | |
|---|---|---|---|---|
| | **Reference water - RW** | **Level 1 - GC1** | **Level 2 - GC2** | **Level 3 - GC3** |
| 2-methylpropanal | 100% | 144% | 131% | 136% |
| 3-mercapto-3-methylbutylformate | 100% | 137% | 150% | 155% |
| 4-vinylguaiacol | 100% | 118% | 113% | 127% |
| 4-hydroxy-2,5-dimethyl-3(2H)-furanone | 100% | 153% | 135% | 112% |
| 2-ethyl-5-methylpyrazine | 100% | 76% | 74% | 77% |
| 2-ethyl-3,5-dimethylpyrazine | 100% | 86% | 84% | 89% |

## Claims

1. A process for enhancing *in situ* the flavour of roasted coffee beans comprising the steps of
a) roasting green coffee beans; and
b) cooling the roasted coffee beans by adding a quenching solution to the roasted coffee beans, wherein said quenching solution comprises at least one flavour precursor.

2. A process according to claim 1, wherein the moisture content of roasted coffee beans after step b) is less than 15 wt%.

3. A process according to any of claims 1 and 2, wherein the quenching solution is added in step b) in an amount between 2%wt and 25 wt% of total green coffee beans.

4. A process according to any of the preceding claims, wherein the quenching solution comprises at least one flavour precursor in an amount between 0.01wt% and 10wt%.

5. A process according to any of the preceding claims, wherein the quenching solution comprises at least one sugar that is either a non-reducing or a reducing sugar.

6. A process according to any of the preceding claims, wherein the quenching solution comprises at least one sugar that is selected from the group consisting of rhamnose, xylose, glucose, galactose, ribose, fructose, glyceraldehyde, palatinose, isomaltulose, arabinose, lactose, maltose, cellobiose, invert sugar, sucrose, oligofructose and any combination thereof.

7. A process according to any of the preceding claims, wherein the quenching solution comprised at least one sugar in an amount comprised between 0.5wt% and 5wt%.

8. A process according to any of the preceding claims, wherein the quenching solution comprises at least one amino acid that is selected from the group consisting of methionine, serine, alanine, lysine, cysteine, proline, hydroxyproline, phenylalanine, leucine, isoleucine, threonine, valine, glutamine, tyrosine, arginine, glycine and any combination thereof.

9. A process according to any of the preceding claims, wherein the quenching solution comprises at least one amino acid in an amount comprised between 0.02wt% and 0.5wt%

10. A process according to any of the preceding claims, wherein the quenching solution comprises at least one sugar and/or at least one amino acid as flavor precursors.

11. A process according to any of the preceding claims, wherein the quenching solution comprises at least one sugar in an amount comprised between 0.5wt% and 5wt% and/or at least one amino acid in an amount comprised between 0.02wt% and 0.5wt%.

12. A process according to any of the preceding claims, wherein the quenching solution comprises a buffering agents, preferably phosphate buffer, carboxylate buffer, citrate buffer, or any combination thereof.

13. A process according to any of the preceding claims, wherein the quenching solution comprises an ingredient that naturally comprises a mix of precursor, preferably green coffee extract, a fruit juice or any other complex precursor source, or any combination thereof.

14. Beverages made from roasted coffee beans obtainable by the process according to any of the preceding claims.
